Europäisches Patentamt
European Patent Office
Office européen des brevets

(19) (11) Publication number: **0 255 702 A2**

# (12) EUROPEAN PATENT APPLICATION

(21) Application number: 87111059.9

(22) Date of filing: 30.07.87

(51) Int. Cl.⁴: C01B 13/14

(30) Priority: 31.07.86 IT 2133586

(43) Date of publication of application: 10.02.88 Bulletin 88/06

(84) Designated Contracting States: BE CH DE ES FR GB LI NL

(71) Applicant: Montedison S.p.A.
31, Foro Buonaparte
I-20121 Milan(IT)

(72) Inventor: Albizzati, Enrico
64, via Roma
I-28041 Arona Novara(IT)
Inventor: Mello Ceresa, Emiliano
67, via E Bona 30
I-13050 Sordevolo Vercelli(IT)
Inventor: Zaninetta, Luciano
51/A, via Piave
I-28041 Arona Novara(IT)

(74) Representative: Barz, Peter, Dr. et al
Patentanwälte Dipl.-Ing. G. Dannenberg Dr. P. Weinhold, Dr. D. Gudel Dipl.-Ing. S. Schubert, Dr. P. Barz Siegfriedstrasse 8
D-8000 München 40(DE)

## (54) Process for preparing fine particles of metal oxides.

(57) The present invention relates to a process for preparing spheroidal particles of metal oxides having an average diameter smaller than 3 microns, which process is characterized in that an emulsion is prepared of a hydrolyzable liquid metal compound in a perfluoropolyether and the emulsion is reacted with water, water vapour or a mixture, in any ratio, of water with a liquid miscible or immiscible with it, which does not interfere with the reaction of the metal compound with water, thus, obtaining a metal oxide hydrate which is separated, subsequently dried and calcined.

EP 0 255 702 A2

# PROCESS FOR PREPARING FINE PARTICLES OF METAL OXIDES

The present invention relates to a process for preparing fine particles of metal oxides. More particularly, it relates to a process for preparing spheroidal particles of metal oxides, having a submicronic average diameter or having an average diameter smaller than 3 microns. The abovementioned particles are, for example, used in the preparation of ceramic materials.

The preparation is known of fine particles of metal oxides by reaction with water vapour of an aerosol of hydrolyzable metal compounds in an inert gas.

This method has several drawbacks. First of all, the metal compounds must be completely evaporated before forming the aerosol, with a consequent high energy consumption. Furthermore, the method implies the use of large volumes of inert gas which must, moreover, have a particularly low moisture level. On the other hand, only hydrolyzable metal compounds having a high vapour pressure can be used. Finally, the method has a poor potentiality, requires high investment and production costs.

A purpose of the present invention is to provide a process for preparing fine particles of metal oxides which overcomes the above-mentioned drawbacks.

This, and further purposes are achieved by the process of the present invention for preparing spheroidal particles of metal oxides of average diameter smaller than 3 microns. This process is characterized in that an emulsion is prepared of a hydrolyzable liquid metal compound in a perfluoropolyether and the emulsion is reacted with water, with water vapour or with a mixture, in any ratio, of water with a liquid miscible or immiscible with it, which does not interfere with the reaction of the metal compound with water, in such a way the formation being obtained of a metal oxide hydrate, which is separated; the metal oxide hydrate is subsequently dried and calcined.

By the term "hydrolyzable metal compound" a metal compound is meant, able to react with water to yield the corresponding oxide hydrate.

The hydrolyzable metal compound is preferably a compound of Ti, Al, Zr Si or B.

The perfluoropolyethers are well-known compounds, described, e.g., in the patents to which reference is made hereunder.

Suitable perfluoropolyethers for forming the emulsions of hydrolyzable metal compounds are, in particular, those complying with the following formulae, and having a viscosity of from 4 to 1500 cSt:

A) $CF_3O\text{-}(C_3F_6O)_m(C_2F_4O)_n(CFXO)_q\text{-}CF_3$

wherein X is equal to -F or $-CF_3$; $\underline{m}$, $n$ and $\underline{q}$ are integers; the ratio

$$\frac{m}{n+q}$$

is comprised within the range of from 1 to 50 and n/q is comprised within the range of from 1 to 10; the oxyperfluoroalkylene units are randomly distributed along the chain.

The preparation of these compounds is described in US-A-3 665 041.

B) $C_3F_7O(C_3F_6O)_m\text{-}R_f$

wherein $R_f$ is $-C_2F_5$ or $-C_3F_7$ and $\underline{m}$ is an integer higher than 2. The preparation of these compounds is described in US-A-3 242 218.

C) $CF_3O(C_2F_4O)_p(CF_2O)_q\text{-}CF_3$

wherein $\underline{p}$ and $\underline{q}$ are integers equal to or different from each other and the p/q ratio is comprised within the range of from 0.5 to 1.5; the oxyperfluoroalkylene units are randomly distributed along the chain.

The preparation of these compounds is described in US-A-3 715 378 and 3 665 041.

D) $CF_3O(C_3F_6O)_m(CFXO)_n\text{-}CF_2Y$

wherein X and Y, equal to or different from each other, are -F or $-CF_3$; $\underline{m}$ and $\underline{n}$ are integers and the m/n ratio is comprised within the range of from 5 to 40. The oxyperfluoroalkylene units are randomly distributed along the chain.

The preparation of these compounds is described in GB-A-1 104 482 and 1 226 566.

E) The perfluoropolyethers having an oxetane structure, as disclosed in EP-A-191 490.

F) $R'_fO(CF_2CF_2O)_pR_f$

wherein $R_f$ and $R'_f$, equal to or different from each other, are $-CF_3$ or $-C_2F_5$ and $\underline{p}$ is such an integer that the viscosity is comprised within the stated range.

Products of this type are described in US-A-4 523 039.

G) $R'_fO(CF_2CF_2CF_2O)_sR_f$

wherein $R_f$ and $R'_f$, equal to or different from each other, are $-CF_3$ or $-C_2F_5$, and s is such an integer that the viscosity is comprised within the stated range.

Products of this type are disclosed in EP-A-148 482.

Usually, the perfluoropolyether used to form the emulsion has a viscosity comprised within the range of from 4 to 200 cSt.

The hydrolyzable metal compounds used to form the emulsions are, for example, the alkoxides and haloalkoxides of Al, Ti, Zr and B (such as the isopropyloxide, sec-butyloxide, n-butyloxide and n-propyloxide), the halides, such as $TiCl_4$, $BCl_3$ and $SiCl_4$ and those halide complexes which are liquid at emulsifying temperature; e.g., $AlCl_3$ complexes with aromatic esters and $TiCl_4$ complexes with long-chain aliphatic ethers.

As it has already been stated, these metal compounds must be liquid at the emulsifying temperature. Usually, the emulsion is prepared at ambient temperature. It is, however, possible to operate at a lower or higher than ambient temperature; e.g., within the range of from -30 to +90°C.

The alkoxides can be used as solutions in their corresponding alcohol. When Al, Ti, Zr or B oxides are prepared, as the starting materials the alkoxides are commonly used.

The ratio, by volume, of the hydrolyzable metal compound to the perfluoropolyether in the emulsion is comprised within the range of from 0.01 to 1.

The emulsion is preferably prepared in the presence of an emulsion stabilizer consisting of a perfluoropolyether having a functional end group. Preferably, the perfluoropolyether having a functional end group has the following end groups:

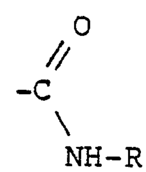

or

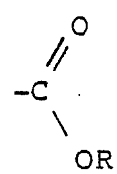

wherein R is a linear, branched or cyclic alkyl of from 1 to 20 C atoms or an alkylaryl of from 7 to 20 C atoms; R may also contain heteroatoms, in particular O and/or Si atoms, and substituents, e.g., Cl.

Examples of suitable emulsion stabilizers are:

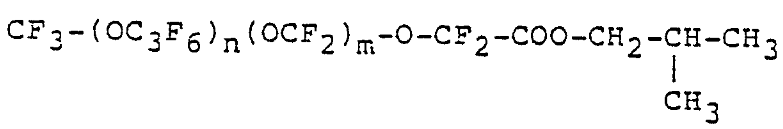

(I)

$CF_3-(OC_3F_6)_n(OCF_2)_m-OCF_2-COO-CH_2-CHOH-O-(CH_2)_3-Si(OMe)_3$ (II)

$CF_3-(OC_3F_6)_n(OCF_2)_m-O-CF_2CO-NH-(CH_2)_3-Si(OEt)_3$. (III)

The amount of emulsion stabilizer is generally comprised within the range of from 0.01% to 5% by weight based on perfluoropolyether, more usually, from 0.1 to 0.5% thereof is used.

Any process that allows the emulsion to be obtained can conveniently be used in the process of the invention.

The emulsion can be prepared, e.g., by means of a strong stirring, e.g., by using an ultraturrax stirrer.

The emulsion is prepared under an adequate stirring. By increasing the stirring rate, smaller particles of oxide hydrate are obtained.

When the viscosity of the perfluoropolyether is increased, particles of oxide hydrate of larger dimensions are obtained.

A first method for carrying out the hydrolysis consists in adding the emulsion to water, with stirring.

A second method consists in adding, always with stirring, the emulsion to water mixed, in any ratios, with a liquid miscible or immiscible with it.

Among the water-miscible liquids which can be used according to the present invention, the alcohols of from 1 to 8 C atoms and ethylene glycol can be mentioned. Among the immiscible liquids, perfluoropolyethers, hydrocarbons and silicone oils can be mentioned. More commonly, water is present inside such blends in amounts ranging from 0.1 to 90% by volume.

A third method to carry out the hydrolysis consists in adding the emulsion to water vapour. Water vapour can be used as such or contained in a gas such as, e.g., nitrogen; usually, a gas saturated with water is used. In this case, the sphericity of the oxide hydrate is generally improved.

The amount of water relatively to the metal compound may vary within a wide range. The minimum amount is that amount which is stoichiometrically required to carry out the hydrolysis reaction. However, large water excesses may be used, and an amount of water equal to 2.5 times the stoichiometric ratio is commonly used.

The emulsion can be prepared and introduced into the liquid water phase (water, or blends thereof with other liquids), by a high-linear-speed stream. To that purpose, a homogeneous mixture is prepared of the hydrolyzable metal compound and of the perfluoropolyether and the mixture is passed, under pressure, through a tube having a length equal to from 500 to 3000 times its diameter, and wherein the linear speed of the mixture is higher than 1 metre/second. Such a stream can be introduced into a vessel containing the liquid aqueous phase or into a recycle circuit, wherein the liquid aqueous phase is circulated. When such a stream is used, the emulsion pressure is generally comprised within the range of from 20 to 90 relative atm.

By injecting the emulsion in such a way, the diameter of the oxide hydrate particles is reduced.

By operating with a high-linear-speed emulsion stream, the introduction of the emulsion into the liquid aqueous phase requires a short time. When such a procedure is not used, the introduction of the emulsion into the liquid aqueous phase or the introduction of the liquid aqueous phase into the emulsion is preferably gradual: it is carried out, e.g., over a time of from 1 to 30 minutes.

The hydrolysis step can be preceded by a pre-hydrolysis: i.e., a small amount of water is introduced into the emulsion, before the true hydrolysis being performed. Usually, from 5 to 10% of the total water used in the process is introduced with stirring. Usually, this water addition is istantaneous. After such an addition, stirring is continued for a certain time, e.g., for 5 minutes, before the true hydrolysis being carried out. This pre-hydrolysis improves the sphericity of the oxide hydrate.

The hydrolysis is commonly carried out at ambient temperature. However, operating at a lower or higher temperature, e.g., within the range of from -30°C to +90°C, is possible. When operating under 0°C, water must be in the presence of a substance which lowers its freezing point, such as ethylene glycol.

The separation of the oxide hydrate from the liquid phase, at hydrolysis end, can be carried out by known methods, e.g., by filtration.

The oxide hydrate is dried by known methods. The calcination is carried out, as well-known, at different temperatures, as a function of the nature of the oxide hydrate and of its desired crystalline form.

The present invention is also suitable to prepare mixed metal oxides.

The following examples are given for the purpose of better illustrating the present invention.

Example 1

To a 500-cc stainless-steel autoclave equipped with an anchor stirrer, 200 cc of a perfluoropolyether Fomblin® Y of viscosity 20 cSt, sold by Montefluos S.p.A. and 200 cc of titanium tetra-n-butoxide are added at room temperature. Fomblin ® Y is within the formula:

$CF_3O-(C_3F_6O)_n(CF_2-O)_m-CF_3$ (IV)

The mixture is stirred for 5 minutes to homogenize it. Then, under an overpressure of 10 atm of nitrogen, which is kept constant for the duration of the test, within a time of 30 seconds, the mixture is passed through a stainless steel tube that is 4 metres long and has an inner diameter of 2 mm, to form the emulsion, which is discharged into a glass flask containing 2 litres of distilled water kept vigorously stirred.

The so-formed suspension is filtered over a Millipore filter with a cut-off of 0.2 microns; the obtained solid is washed with distilled water, and then with trichlorofluoromethane. The solid is oven-dried and inspected by scanning electron microscope, while its granulometric distribution is analysed by the sedigraph technique. The particles have a spheroidal shape and an average diameter of 0.5 microns.

Example 2

Example 1 is repeated, by using, instead of titanium alkoxide, an equal volume of aluminum butyloxide, and a nitrogen overpressure of 15 atm.

The obtained solid has a spheroidal shape and an average diameter of 0.3 microns.

Example 3

Example 1 is repeated, by using, instead of titanium alkoxide, an equal volume of Zr n-propyloxide dissolved in propanol, and a nitrogen overpressure of 15 atm.

The obtained solid has a spherical shape and an average diameter of 0.3 microns.

Example 4

To the same autoclave of example 1, 200 cc of perfluoropolyether Galden®/D05 of 5 cSt viscosity sold by Montefluos S.p.A., 5 cc of isopropyl titanate and 0.2 cc of an amidosilane of Fomblin®Y , having an acidimetric equivalent weight of 5000, are added. Golden®/D05 is within formula (IV) of example 1 and the above Fomblin®Y amidosilane is within formula (III), as reported in the description.

The mixture is stirred for 5 minutes and, under an overpressure of 30 atm nitrogen, kept constant throughout the duration of the test. Within a time of 50 seconds, the mixture thus formed is discharged through a stainless steel tube that is 1 metre long and has an inner diameter of 1 mm, into a glass flask equipped with an anchor stirrer, containing 800 cc of Golden®/D05, 3.2 cc of distilled water and 0.5 cc of Rioklen®NF 10 (ethoxylated alkylphenol), the stirring being carried out at 1500 rpm.

The solid, isolated by the same modalities as in example 1, has a spherical shape and an average diameter of 0.5 microns.

Example 5

Example 4 is repeated, with the exception of the specifically indicated modalities.

5.77 g of aluminum sec-butyloxide and a nitrogen overpressure of 60 atm are used. The mixture is discharged within 15 minutes and 30 seconds through a tube of 1 metre length having an internal diameter of 0.75 mm, into a circuit containing 2.5 litres of Galden®/D05 and 3.2 cc of distilled water.

The solid, isolated by the same modalities as of Example 1, shows a spheroidal shape and a diameter of 2 microns.

Exampe 6

Example 5 is repeated, with the exception of the specifically indicated modalities.

7.75 cc of zirconium n-propyloxide in solution in its corresponding alcohol and 150 cc of perfluoropolyether are used.

Before discharging the mixture, 0.16 cc of distilled water are added, and the mixture is discharged a few minutes later. The mixture is discharged within a 14-minutes time. The solid, isolated by the same modalities as of Example 1, shows a spheroidal shape and an average diameter of 1.5 microns.

Example 7

To a 2-litre glass reactor, equipped with an anchor stirrer, 200 cc of perfluoropolyether Galden®/D20, having a viscosity of 18 cSt, sold by Montefluos S.p.A., 5 cc of isopropyl titanate and 0.2 cc of the above Fomblin®Y amidosilane are charged. Galden®/D20 is within formula (IV) of Example 1.

The reactor contents are stirred 5 minutes at 600 rpm, and are then discharged by gravity into an underlying flask, equipped with an anchor stirrer, containing 800 cc of Galden®/D20 and 3.2 cc of distilled water, kept vigorously stirred (1000 rpm).

The solid, isolated by the same modalities as of Example 1, shows a spheroidal shape, and an average diameter of 2 microns.

Example 8

Example 5 is repeated, but with the difference that 0.16 cc of distilled water is charged to the autoclave, and that before discharging the autoclave contents, some minutes are made elapse.

The solid, isolated by the same modalities as of Example 1, shows a spheroidal shape, and an average diameter of 2 microns.

Example 9

To a glass vessel, 200 cc of perfluoropolyether Galden®/D05, 5 cc of isopropyltitanate and 0.2 cc of the above Fomblin®Y amidosilane are charged. The contents of the vessel are stirred 5 minutes by an ultraturrax stirrer, at a speed of 4500 rpm, and, with the stirring being maintained, 3.2 cc of distilled water is then added dropwise.

The solid, isolated by the same modalities as of Example 1, shows a spheroidal shape, and an average diameter of 0.3 micron.

**Claims**

1. Process for preparing spheroidal particles of metal oxides having an average diameter of less than 3 microns, characterized in that an emulsion is prepared of a hydrolyzable liquid metal compound in a perfluoropolyether and the emulsion is reacted with water, with water vapour or with a mixture, in any ratio, of water with a liquid miscible or immiscible with it, which does not interfere with the reaction of the metal compound with water, in such a way obtaining the formation of a metal oxide hydrate which is separated and, subsequently, dried and calcined.

2. Process according to claim 1, characterized in that the perfluoropolyether has a viscosity of from 4 to 1500 cSt and is selected from:

A) $CF_3O-(C_3F_6O)_m(C_2F_4O)_n(CFXO)_q-CF_3$

wherein X is -F or $-CF_3$; m, n and q are integers; the ratio

$$\frac{m}{n+q}$$

is comprised within the range of from 1 to 50 and n/q is within the range of from 1 to 10; the oxyperfluoroalkylene units being randomly distributed along the chain;

B) $C_3F_7O(C_3F_6O)_m-R_f$

wherein $R_f$ is $-C_2F_5$ or $-C_3F_7$ and m is an integer higher than 2;

C) $CF_3O(C_2F_4O)_p(CF_2O)_q-CF_3$

wherein p and q are integers equal to or different from each other and the p/q ratio is comprised within the range of from 0.5 to 1.5; the oxyperfluoroalkylene units being randomly distributed along the chain;

D) $CF_3O(C_3F_6O)_m(CFXO)_n-CF_2Y$

wherein X and Y, equal to or different from each other, are -F or $-CF_3$; m and n are integers and the m/n ratio is comprised within the range of from 5 to 40; the oxyperfluoroalkylene units being randomly distributed along the chain;

E) the perfluoropolyethers having an oxetane structure;

F) $R'_fO(CF_2CF_2O)_pR_f$

wherein $R_f$ and $R'_f$, equal to or different from each other, are $-CF_3$ or $-C_2F_5$ and p is such an integer that the viscosity is comprised within the stated range;

G) $R'_fO(CF_2CF_2CF_2O)_sR_f$

wherein $R_f$ and $R'_f$, equal to or different from each other, are $-CF_3$ or $-C_2F_5$ and s is such an integer that the viscosity is comprised within the stated range.

3. Process according to claim 1 or 2, characterized in that the hydrolyzable metal compound is a compound of Ti, Al, Zr, Si or B.

4. Process according to claim 3, characterized in that the hydrolyzable metal compound of Ti, Al, Zr, Si or B is an alkoxide.

5. Process according to one or more of the preceding claims, characterized in that the ratio by volume of the hydrolyzable metal compound to the perfluoropolyether in the emulsion is comprised within the range of from 0.01 to 1.

6. Process according to one or more of the preceding claims, characterized in that the emulsion of the hydrolyzable metal compound in the perfluoropolyether is prepared in the presence of an emulsion stabilizer consisting of a perfluoropolyether having a functional end group.

7. Process according to claim 6, characterized in that the functional end group of the perfluoropolyether is selected from

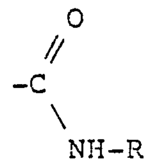

and

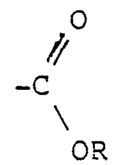

wherein R is a linear, branched or cyclic alkyl of from 1 to 20 C atoms or an alkylaryl of from 7 to 20 C atoms; R may also contain heteroatoms, in particular, O and/or Si atoms, as well as substituents.

8. Process according to claim 6 or 7, characterized in that the amount of emulsion stabilizer is comprised within the range of from 0.01 to 5% by weight, based on the perfluoropolyether.

9. Process according to one or more of the preceding claims, characterized in that the liquid miscible with water is an alcohol of from 1 to 8 C atoms, or ethylene glycol.

10. Process according to one or more of claims 1 to 8, characterized in that the liquid immiscible with water is a perfluoropolyether, a hydrocarbon or a silicone oil.

11. Process according to one or more of the preceding claims, characterized in that, in the mixture of water with a liquid miscible or immiscible with it, water is present in an amount ranging from 0.1 to 90% by volume.

12. Process according to one or more of the preceding claims, characterized in that the emulsion of the hydrolyzable metal compound in the perfluoropolyether is obtained by passing a homogeneous mixture of said compounds, under pressure, through a tube having a length of from 500 to 3000 times its diameter and wherein the linear speed of the mixture is higher than 1 metre/second.

13. Process according to one or more of the preceding claims, characterized in that, before reacting the emulsion with water, water vapour or the water-liquid mixture, a small amount of water is added to the emulsion.

14. Process according to claim 13, characterized in that the amount of water is of from 5 to 10% of the total water used in the process.

15. Spheroidal particles of metal oxide, having an average diameter of less than 3 microns, obtainable by the process according to one or more of the preceding claims.

16. Spheroidal particles of Ti, Al, Zr, Si or B oxide, having an average diameter of less than 3 microns, obtainable by the process according to one or more of claims 1 to 14.